# EUROPEAN PATENT APPLICATION

(11) **EP 4 617 102 A1**
(43) Date of publication of application: **17.09.2025**
(21) Application number: 24163530.9
(22) Date of filing: 14.03.2024
(51) Int. Cl.: B60L 7/10, B60L 7/20, B60L 7/22, B60L 7/24, B60L 3/00, B60L 7/26, B60L 15/20, B60W 20/14, B60W 30/18

(54) **CONTROL ARRANGEMENT AND METHOD FOR CONTROLLING AN ELECTRICAL MACHINE OF A VEHICLE**

(71) Applicant: Scania CV AB, 151 87 Södertälje (SE)
(72) Inventor: STÅHL, Daniel, 749 48 Enköping (SE); CARLGREN, Magnus, 619 94 Vagnhärad (SE); BERGLUND, Martin, 619 73 Vagnhärad (SE); VESTGÖTE, Karl, 611 63 Nyköping (SE)
(74) Representative: Scania CV AB

(57) **Abstract**

A control arrangement (100) and a method for controlling an electrical machine (3, 3') of a vehicle (1), wherein said machine (3, 3') is configured to provide propulsion power to one or more drive wheels (8, 8') of the vehicle (1) and the vehicle (1) comprises an energy storage system (20) configured to power the electrical machine (3, 3'). The method comprises a step of, in response to a request for draining of the energy storage system (20), disconnecting the electrical machine (3, 3') from the one or more drive wheels (8, 8'). The method further comprises a step of controlling the electrical machine (3, 3') to oscillate between a first rotational speed (ω₁) and a second rotational speed (ω₂) to thereby consume energy from the energy storage system (20).

## Description

### TECHNICAL FIELD

The present disclosure relates in general to a method for controlling an electrical machine of a vehicle. The present disclosure further relates in general to a control arrangement configured to control an electrical machine of a vehicle.

The present disclosure also relates in general to a computer program as well as a computer-readable medium. Furthermore, the present disclosure relates in general to a vehicle.

### BACKGROUND

Regenerative braking is an efficient tool for controlling the travelling speed of a vehicle, especially for heavy vehicles, when travelling in e.g. downhills. Moreover, regenerative braking also has the advantage of enabling recovery of energy, which may later be used for the propulsion of the vehicle. This may in turn increase the driving range of the vehicle. During regenerative braking, at least one electrical machine of the vehicle is operated as a generator to thereby convert kinetic energy of the vehicle into electrical energy. The electrical energy generated may be used to charge an energy storage system of the vehicle. Thereby, the recovered energy can later be used for powering the electrical machine when the electrical machine is operated as a propulsion unit.

The ability to use regenerative braking is however limited by the storage capacity of the energy storage system. The maximum storage capacity of an energy storage system is normally given by a predetermined maximum threshold value. During a braking event, the energy storage system may only be charged to the predetermined maximum threshold value and cannot accept any additional energy without a risk of damage of the energy storage system. Therefore, when the capacity of the energy storage system is at or above the predetermined maximum threshold value, regenerative braking can no longer be used for controlling the travelling speed of the vehicle during a braking event and a loss of braking power from the electrical machine may occur. Furthermore, the ability of the energy storage system to receive charge may be limited as when the state of charge approaches the predetermined maximum threshold, which in turn limits the achievable regenerative braking power and may therefore lead to a reduction of the braking power delivered from the electrical machine.

In case the capacity of the energy storage system, at the start of the regenerative braking event, is insufficient to enable the regenerative braking power needed for the braking event, other braking systems of the vehicle may need to be used during at least a part of the braking event. Examples of such other braking system may include the service brakes or auxiliary brake systems (other than the regenerative brake system), such as a retarder or an engine brake system (in case of a hybrid vehicle). Usage of the service brakes during a braking event may, especially during an extended braking event, result in increased wear and/or overheating of the service brakes. This may in turn present a safety risk. Furthermore, a vehicle comprising a regenerative brake system may not always comprise additional auxiliary brake systems or the additional auxiliary brake systems may be designed for a lower braking power.

One way to ensure that a desired speed may be maintained during a braking event through usage of regenerative braking is to reduce the travelling speed in advance of the vehicle reaching the geographical position at which the braking event is initiated, such as the start of a downhill, thereby also reducing the regenerative braking power needed to maintain the desired speed during the braking event. Such a reduction of the travelling speed may for example be performed by simply reducing the acceleration of the vehicle. A predictive reduction of the travelling speed of the vehicle may however in some cases disturb or irritate the driver of the vehicle as well as other road users, e.g., for not understanding the reason for the reduced travelling speed. This is particularly the case in situations where a considerable reduction of the travelling speed of the vehicle before reaching the braking event, such as a downhill, would be needed. Therefore, a reduction of the travelling speed prior to e.g. a downhill, sufficient to ensure that the desired speed may be maintained through regenerative braking in the downhill, may not always be a feasible solution. A considerable reduction of the travelling speed also increases the driving time needed to reach a destination of the vehicle, which in turn may have a negative effect on the total cost of operation for e.g. a hauler.

Therefore, it may sometimes be desired to seek to drain the energy storage system in advance of an upcoming regenerative braking event, either as an alternative to predictively reducing the travelling speed or in addition to reducing the travelling speed of the vehicle in advance of said regenerative braking event. Draining of the energy storage system may be achieved by allowing the vehicle to consume more energy than is needed for the purpose of propulsion thereof and allowing an electrical machine, powered by the energy storage system, compensate for increased energy while ensuring the sufficient propulsion power is provided to the vehicle. In view of the electrical machine compensating for the increased energy consumption of the vehicle, it will inherently consume more of the energy stored in the energy storage system. Increasing the energy consumption of the vehicle may be achieved in various ways, for example by increasing the air resistance of the vehicle through alteration of the ride height or activating braking of a possible trailer to increase the energy consumption of the tractor vehicle. However, previously known ways to increase the energy consumption of the vehicle may not, depending on the particular driving situation, always be suitable option, e.g., for decreasing vehicle safety. It would therefore be advantageous to find further ways for draining of an energy storage system.

EP 4294660 A1 discloses a method for controlling a vehicle. The method comprises, a step of, in case it is predicted that the energy storage device will have an insufficient capacity for a desired regenerative braking power during an identified upcoming braking event, applying a braking force by activating the service brake. The service brake is activated either simultaneously with application of a propulsion force by the electric motor or in a plurality of consecutive brake phases during which a propulsion force by the electric motor is temporarily interrupted, said brake phases separated by a vehicle acceleration phase during which a propulsion force is applied by the electric motor. The method leads to draining of the energy storage device in view of the electric motor at least partly compensating for the braking force applied by the service brake.

### SUMMARY

The object of the present invention is to provide an alternative method for draining of an energy storage system of a vehicle to thereby expand the possibilities for using regenerative braking for controlling vehicle speed.

The object is achieved by the subject-matter of the appended independent claim(s).

The present disclosure provides a method, performed by a control arrangement, for controlling an electrical machine of a vehicle. The electrical machine is configured to provide propulsion power to one or more drive wheels of the vehicle. Furthermore, the vehicle comprises an energy storage system configured to power the electrical machine. The method comprises a step of, in response to a request for draining of the energy storage system, disconnecting the electrical machine from the one or more drive wheels, unless already disconnected. The method further comprises a step of controlling the electrical machine to oscillate between a first rotational speed and a second rotational speed to thereby consume energy from the energy storage system.

The herein described method provides an alternative way for draining of an energy storage system of a vehicle, which for example may be used in situations where other ways of draining of the energy storage system are not available or not suitable (or undesired) in a particular driving situation. Thereby, the herein described method extends the possibilities for ensuring that sufficient regenerative braking power for an upcoming braking event is available when the vehicle reaches the braking event, or at least increases the amount of regenerative braking power achievable during the upcoming braking event. In other words, the possibilities for using regenerative braking during a braking event may be improved by means of the herein described method, which in turn increases road safety and reduces the risk of having to brake the vehicle by usage of e.g., the service brakes.

The present method also has the advantage that it can be used in combination with other methods for draining of the energy storage system, at least in case the vehicle comprises two or more electrical machines. Thereby, the amount of draining of the energy storage system can be further increased, which in turn enables even more regenerative braking power during an upcoming braking event.

The herein described method relies on utilizing the inertia of the electrical machine to load the electrical machine. Controlling the electrical machine to oscillate between the first and second rotational speeds, while the electrical machine is disconnected from the one or more drive wheels, not only discharges the energy storage system by acceleration of the electrical machine, but also causes energy losses to occur e.g., in the electrical machine.

The herein described method is particularly advantageous in situations where the energy storage system may need to be conditioned prior to an upcoming braking event, for example to be able to receive sufficient charging power for delivering a desired regenerative braking power to the vehicle. This is because the discharge resulting from the consumption of energy leads to an increase in temperature inside the energy storage system. In general, energy storage systems can receive higher charging power at higher temperature. A too low temperature of the energy storage system may therefore negatively affect the braking power deliverable to the vehicle through regenerative braking.

The step of controlling the electrical machine to oscillate between a first rotational speed and a second rotational speed may comprise controlling the electrical machine to oscillate between a first rotational speed and a second rotational speed of a power-speed curve of the electrical machine. This allows having the first and second rotational speeds at high power of the electrical machine, which increases the energy losses and thereby also the energy consumption from the energy storage system. The power-speed curve may preferably be a maximum power-speed curve of the electrical machine as this allows as much energy as possible to be consumed from the energy storage system.

The first and second rotational speeds of the power-speed curve may for example be arranged on opposite sides of a rotational speed corresponding to a peak of the power-speed curve of the electrical machine. Thereby, the electrical machine may oscillate about the maximum power speed, which results in high energy losses and thereby a high energy consumption from the energy storage system.

In case the power-speed curve comprises a plateau, at least one of said first and second rotational speeds may be within the plateau of the power-speed curve of the electrical machine. This may e.g. facilitate the control of the electrical machine in case the power-speed curve is steep on one or more sides of the plateau, which in turn ensures the desired energy consumption from the energy storage system.

The step of controlling the electrical machine to oscillate between a first rotational speed and a second rotational speed may alternatively comprise altering direction of rotation of the electrical machine. In such a case, the first rotational speed is a positive rotational speed whereas the second rotational speed is a negative rotational speed, or vice versa. This alternative has the advantage of enabling a reduction of the frequency of the oscillation compared to if oscillating between two rotational speed (having the same rotational direction) of a power-speed curve, which in turn may reduce the noise generated and/or reduce wear of the electrical machine.

The herein described method may be performed while the vehicle is in motion. For example, the method may be performed during coasting of the vehicle. Alternatively, in case the vehicle comprises a first powertrain comprising the electrical machine, and a second powertrain being separate from the first powertrain, the method may be performed while the vehicle is propelled by the second powertrain.

The method may further comprise a step of generating the request for draining of the energy storage system when it is predicted that the energy storage system has, or will have, an insufficient capacity to enable a desired regenerative braking power for an upcoming braking event of the vehicle. This allows for draining of the energy storage system, achieved through the oscillation of the electrical machine between the first and second rotational speeds, before the vehicle reaches the upcoming braking event.

The method may further comprise a step of recovering heat generated by the electrical machine as a result of the electrical machine oscillating between the first and second rotational speeds, and using the recovered heat for conditioning of the energy storage system. This may further improve the ability to use regenerative braking during an upcoming braking event.

The present disclosure further relates to a computer program comprising instructions which, when executed by a computer, cause the computer to carry out the method as described above.

The present disclosure further relates to a computer-readable medium comprising instructions which, when executed by a computer, cause the computer to carry out the method as described above.

Moreover, the present disclosure provides a control arrangement configured to control an electrical machine of a vehicle. Said electrical machine is configured to provide propulsion power to one or more drive wheels of the vehicle, and said vehicle comprises an energy storage system configured to power the electrical machine. The control arrangement is configured to, in response to a request for draining of the energy storage system, disconnect the electrical machine from the one or more drive wheels, unless already disconnected. The control arrangement is thereafter further configured to control the electrical machine to oscillate between a first rotational speed and a second rotational speed to thereby consume energy from the energy storage system.

The control arrangement provides the same advantages as described above with reference to the corresponding method for controlling an electrical machine of a vehicle.

As previously mentioned, the first and second rotational speeds between which the electrical machine is controlled to oscillate may correspond to a first rotational speed and a second rotational speed of a power-speed curve of the electrical machine. Said power-speed curve may suitably be a maximum power-speed curve of the electrical machine. Alternatively, the first rotational speed is a positive rotational speed whereas the second rotational speed is a negative rotational speed of the electrical machine, or vice versa.

The control arrangement may further be configured to generate the request for draining of the energy storage system when it is predicted that the energy storage system has, or will have, an insufficient capacity to enable a desired regenerative braking power for an upcoming braking event of the vehicle.

The present disclosure also relates to a vehicle comprising the control arrangement described above. The vehicle may comprise an electrical machine configured to provide propulsion power to one or more drive wheels of the vehicle as well as an energy storage system configured to power the electrical machine.

The vehicle may be a vehicle comprising a single vehicle unit, or be a vehicle combination comprising at least two vehicle units (such as a tractor vehicle unit and at least one trailing vehicle unit). Moreover, the vehicle may comprise a single powertrain, or a plurality of vehicle powertrains that are separated from each other. In case of the vehicle comprising more than one vehicle unit, one or more of said vehicle units may comprise its own powertrain(s). The vehicle may for example be a land-based heavy vehicle, such as a truck or a bus, but is not limited thereto. Moreover, the vehicle may be a fully electric vehicle, a fuel cell vehicle, or a hybrid vehicle.

Furthermore, the vehicle may be a vehicle configured to a driven fully or in part by a driver. Such a driver may be present onboard the vehicle or be remote from the vehicle, such as at a control center or the like. Alternatively, the vehicle may be a fully autonomous vehicle.

### BRIEF DESCRIPTION OF DRAWINGS

- Fig. 1: schematically illustrates an example of a vehicle,
- Fig. 2: schematically illustrates a first example of a powertrain,
- Fig. 3: schematically illustrates a second example of a powertrain,
- Fig. 4: represents a flowchart schematically illustrating one exemplifying embodiment of the herein described method,
- Fig. 5: schematically illustrates the rotational speed of the electrical machine over time when the herein described method is performed,
- Fig. 6: illustrates a first example of a maximum power-speed curve of an electrical machine,
- Fig. 7: illustrates a second example of a maximum power-speed curve of an electrical machine,
- Fig. 8: schematically illustrates an exemplifying embodiment of a device which may comprise, consist of, or be comprised in a control arrangement configured to perform the herein described method, and
- Fig. 9: illustrates a side view of a second example of a vehicle.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

A vehicle is in the present disclosure considered to mean any means that may be used for transporting people and/or cargo. A vehicle may consist of a single vehicle unit. Examples of a vehicle consisting of a single vehicle unit includes a car, a rigid truck, a tractor truck, a bus, a self-powered trailer, or a self-powered dolly, but are not limited thereto. Alternatively, a vehicle may constitute a vehicle combination comprising at least two vehicle units which are linked together when travelling. A vehicle combination may be a vehicle comprising a tractor vehicle and at least one trailing vehicle. Examples of vehicle combinations include a semi-trailer truck, a rigid truck pulling a semitrailer using a dolly, or a vehicle train comprising a rigid truck and one or more trailers, but are not limited thereto.

A powertrain of a vehicle usually comprises at least one power unit (also known as a propulsion unit) and a driveline configured to transmit propulsion/braking power to at least one drive wheel of the vehicle. Examples of power units include an electrical machine and a combustion engines. A driveline typically comprises a transmission arrangement. Such a transmission arrangement comprises at least one transmission unit, which e.g., may be a single reduction gear/single speed transmission unit or a multispeed transmission unit. A driveline may further comprise one or more shafts, for example a propeller shaft and/or a drive shaft. A driveline may also comprise other types of components, such as one or more joint devices (e.g. universal joints or constant velocity joints), a clutch, a differential etc..

In the present disclosure, two or more powertrains are considered to be separated from each other when there is no possibility for directly transmitting torque between said powertrains and the powertrains are connected to different drive wheel(s) of the vehicle. In other words, two powertrains are mechanically separated when a power unit of one of the powertrains cannot transmit torque to the drive wheel(s) of the other powertrain and vice versa.

An energy storage system used for powering one or more electrical machines of a vehicle may comprise one or more battery packs. In case the energy storage system comprises a plurality of battery packs, these may be connected in series and/or in parallel. Each battery pack may typically comprise a plurality of battery modules connected in series and/or in parallel. A battery module typically comprises multiple battery cells connected in series and/or parallel, partly or fully encased in a mechanical structure. Other configurations of energy storage systems are also possible, if desired. For example, it is also possible to arrange individual battery cells in a battery pack, without the use of modules. The battery cells may for example be lithium-ion battery cells or sodium-ion battery cells, although other types of battery cells are also plausible. The energy storage system may further comprise e.g., a temperature regulating circuit configured to control the temperature of the energy storage system or at least parts thereof, various conductors (e.g. busbars), as well as safety devices (e.g. one or more current interruption devices). The present disclosure is not limited to any specific configuration of the energy storage system. In other words, the herein described method may be used irrespectively of the configuration of the energy storage system.

Draining of an energy storage system is in the present disclosure considered to mean a discharge of the energy storage system in such a manner that causes a loss of stored energy, either intentionally or unintentionally. This is in contrast to an intentional discharge of the energy storage system for powering a power consumer, such as for powering an electrical machine to provide propulsion motive power to the vehicle. That is, draining is in contrast to a use of the stored energy for the purpose for which it has been stored.

Moreover, the term "upcoming braking event" is herein used to describe a future braking event along a route which the vehicle is travelling or is about to travel. An "upcoming regenerative braking event" is in the present disclosure considered to mean an upcoming braking event during which regenerative braking of the vehicle is intended to be used for the purpose of controlling vehicle speed.

Furthermore, the terms "vehicle speed" and "travelling speed" are in the present disclosure used interchangeably.

The present disclosure provides a method for controlling an electrical machine of a vehicle for the purpose of draining an energy storage system configured to power said electrical machine. The electrical machine is configured to provide propulsion power to one or more drive wheels of the vehicle. In other words, the electrical machine is configured to act as a propulsion unit of the vehicle and is comprised in a powertrain of the vehicle. The electrical machine may further be configured to operate as a generator to thereby provide regenerative braking power to the one or more drive wheels. In addition to being configured to power the electrical machine, the energy storage system may be configured to power further constituent components of the vehicle, such as one or more additional electrical machines, or any other power consumer of the vehicle operated on electrical energy.

The herein described method comprises a step of, in response to a request for draining of the energy storage system, disconnecting the electrical machine from the one or more drive wheels of the vehicle, unless already disconnected therefrom. The method further comprises a step of, when the electrical machine is disconnected from the one or more drive wheels of the vehicle, controlling the electrical machine to oscillate between a first rotational speed and a second rotational speed to thereby consume energy from the energy storage system. Thereby, draining of the energy storage system is achieved.

Described differently, the herein described method comprises a step of controlling the electrical machine of the vehicle to oscillate between a first rotational speed and a second rotational speed when the electrical machine is not subjected to the load which would result if the electrical machine would be connected to one or more drive wheels of the vehicle. Instead, the herein described method relies on the utilization of the inertia of the electrical machine (and any associated power electronic device, such as an inverter or converter) to load the electrical machine and thereby generate power. Said generated power will inherently heat the electrical machine, leading to an energy loss. An energy loss will also occur in any power electronic device operatively connected to the electrical machine, such as an inverter or a converter. Moreover, there will be energy losses in the energy storage system as such. More specifically, resistive losses occur due to losses in conductors of the electric system of the energy storage system. These resistivity losses are dependent of on a charging or discharging current, where doubling the charging or discharging current typically means quadrupling the resistivity losses.

Controlling the electrical machine to oscillate between a first rotational speed and a second rotational speed is in the present disclosure intended to mean controlling the electrical machine to repeatedly vary between the first and second rotational speeds, essentially without remaining at the first or the second rotational speeds. The oscillation between the first and second rotational speeds is achieved by fast acceleration and deceleration of the electrical machine. It should here be noted that changing from acceleration to deceleration, or vice versa, of the electrical machine in practice takes a certain amount of time. Therefore, "essentially without remaining at the first or the second rotational speed" should here be interpreted as the duration at either one of the first or the second rotational speed being less than 5 seconds, preferably equal to or less than 2 seconds. Preferably, the change from acceleration to deceleration, or vice versa, should be performed as quickly as possible. This is because the inertia of the electrical machine and any associated power electronic device(s) will quickly be overcome, and therefore no longer serve as a load for the electrical machine, if remaining at a constant rotational speed. In other words, when the inertia occurring during the change in rotational speed is overcome, the load of the electrical machine resulting therefrom is removed which in turn means that essentially no power is produced by the electrical machine. The energy losses are therefore quickly reduced when the inertia is overcome.

The oscillation of the electrical machine between the first and second rotational speeds will inherently lead to a discharge of the energy storage system during the acceleration phases of the electrical machine. It should however be noted that, during the deceleration phases of the electrical machine, a temporary (small) charging of the energy storage system may occur. However, the net result of the oscillation of the electrical machine will still be a net discharge of the energy storage system due to the relatively high energy losses discussed above. Moreover, the discharge of the energy storage system generates heat within the battery cells of the energy storage system. This in turn means that the energy storage system, if said heat is not actively withdrawn, will be conditioned from the inside of the battery cells.

In addition to propelling the vehicle, a vehicle powertrain may also often be used to drive one or more auxiliary power consumers. In other words, an electrical machine of the vehicle powertrain may be configured to also power one or more auxiliary power consumers. Examples of auxiliary power consumers include pumps, cranes, concrete mixers, compressors or the like, but are not limited thereto. For the purpose of enabling powering one or more such auxiliary power consumers, the vehicle may comprise one or more power take-offs operatively connected to the vehicle powertrain and configured to transmit energy from the vehicle powertrain to an auxiliary power consumer connected thereto. In the present disclosure, the above mentioned auxiliary power consumer(s) are considered to constitute a power take-off load when operatively connected to the power take-off. Having the electrical machine subjected to such a power take-off load when performing the step of controlling the electrical machine to oscillate between the first and second rotational speeds may risk damaging the electrical machine and/or the auxiliary power consumer. Therefore, the herein described method may further comprise a step of disconnecting the electrical machine from the power take-off load in response to the request for draining of the energy storage system, unless already disconnected. Such a step would naturally be performed prior to the step of controlling the electrical machine to oscillate between a first rotational speed and a second rotational speed.

The herein described method may be performed while the vehicle is at standstill, such as when starting up the vehicle after a longer stop (such as an overnight stop) or during a temporary stop (such as during loading, at a traffic stop, or the like), when a planned route of the vehicle comprises an upcoming regenerative braking event. However, the method may suitably also be performed while the vehicle is in motion. For example, the method may be performed while the vehicle is coasting. In case the electrical machine is part of a hybrid powertrain, the method may be performed while the electrical machine is disconnected from the rest of the powertrain and the vehicle is driven by the combustion engine of the hybrid powertrain. Alternatively, in case the vehicle comprises two or more separate powertrains, the herein described method may be performed while the vehicle is propelled by a powertrain which does not comprise the electrical machine controlled to oscillate between the first and second rotational speeds. In such a case, the powertrain comprising the electrical machine may be in coasting or, where applicable, provide motive power to the vehicle by means of e.g., a combustion engine or another electrical machine than the one controlled to be oscillating (which in turn is disconnected from the one or more drive wheels of said powertrain).

According to a first embodiment of the herein described method, the step of controlling the electrical machine so as to oscillate between a first rotational speed and a second rotational speed may suitably comprise controlling the electrical machine to oscillate between a first rotational speed and a second rotational speed of a power-speed curve of the electrical machine. This allows having the first and second rotational speeds at high power, which in turn enables a high power output and thereby relatively high energy losses. Furthermore, this avoids having to alter the direction of the rotational speed of the electrical machine, i.e. the first and second rotational speeds have the same rotational direction. This has the advantage of the electric machine not having to pass zero speed and thereby limit the available electrical machine power. Also, possible comfort disturbances caused by the inertia of the electrical machine may be reduced.

The power-speed curve is preferably the maximum power-speed curve of the electrical machine to enable as high energy losses as possible to occur. As known to a person skilled in the art, a maximum power-speed curve of an electrical machine defines the constraints of the electrical machine. The present disclosure is however not limited to controlling the electrical machine to oscillate between a first rotational speed and a second rotational speed of the maximum power-speed curve of the electrical machine. For example, the power-speed curve used could alternatively be a power-speed curve that is offset from the maximum power-speed curve by a predetermined offset, such as by a preselected percentage or value. This could for example be the case if a power (or torque) limitation for the electrical machine, a power electronic device operatively connected to the electrical machine, and/or the energy storage system (configured to power the electrical machine) is active.

According to a second embodiment of the herein described method, the step of controlling the electrical machine to oscillate between a first rotational speed and a second rotational speed may comprise altering direction of rotation of the electrical machine. In other words, the first rotational speed may be a positive rotational speed whereas the second may be a negative rotational speed, or vice versa.

Energy storage systems currently used in the automotive industry typically has a relatively narrow optimal operational temperature range, and may therefore sometimes need to be heated in e.g. cold climates. As previously mentioned, controlling the electrical machine to oscillate between the first and second rotational speeds will cause heat to be generated by the electrical machine. Said heat may be utilized for heating of the energy storage system, to thereby improve the efficiency in the charging/discharging cycle and reduce the risk for damage of the energy storage system. Therefore, the herein described method may further comprise a step of recovering the heat generated by the electrical machine (as a result of the oscillation between the first and second rotational speeds), and using the recovered heat for conditioning of the energy storage system. This means that the battery cells of the energy storage system may be conditioned both from the inside of battery cells due to the discharge occurring during draining, as well as from the outside by transferring the heat recovered from the electrical machine using e.g., a temperature regulating circuit configured therefore.

The above mentioned request for draining of the energy storage system may for example be occasioned by a prediction that the energy storage system has, or will have, insufficient capacity for providing a needed or desired regenerative braking power during an upcoming braking event. Such a prediction may be made by the control arrangement configured to perform the herein described method for controlling an electrical machine of a vehicle, or by another controller of the vehicle. In other words, the request for draining of the energy storage system may be generated by the control arrangement configured to perform the herein described method, or alternatively be generated by another controller of the vehicle and communicated to the control arrangement configured to perform the herein described method. When the request for draining of the energy storage system is generated by the control arrangement configured to perform the herein described method for controlling an electrical machine, the method may therefore comprise a step of generating the request for draining of the energy storage system when it is predicted that the energy storage system has, or will have, an insufficient capacity to enable a desired regenerative braking power for an upcoming braking event of the vehicle.

Predicting whether the energy storage system has, or will have, sufficient or insufficient capacity to enable a desired regenerative braking power for an upcoming braking event may be performed in accordance with previously known methods therefore. Such methods may for example comprise determining a current state of charge of the energy storage system and/or predicting the state of charge that the energy storage system will have when the vehicle reaches the upcoming braking event. Such methods may further comprise predicting the regenerative braking power needed for maintaining a desired travelling speed of the vehicle during the braking event, which in turn is dependent on the travelling speed when the vehicle reaches the braking event as well as the topography of the road section of the braking event. Based on the predicted regenerative braking power needed for maintaining the desired travelling speed, the increase in state of charge resulting from such regenerative braking power may be determined. Thereby, it can be predicted whether the energy storage system, in consideration of the determined current state of charge or predicted state of charge when the vehicle will reach the braking event, will have sufficient capacity for said increase in state of charge.

The performance of the herein described method for controlling an electrical machine of a vehicle may be governed by programmed instructions. These programmed instructions may take the form of a computer program which, when executed by a computer, cause the computer to effect desired forms of control action. Such a computer may for example be comprised in the control arrangement as described herein. A computer is in the present disclosure considered to mean any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner.

The above described programmed instructions, which may take the form of a computer program, may be stored on a computer-readable medium. Hence, the present disclosure also relates to a computer-readable medium storing instructions, which when executed by computer, cause the computer to carry out the herein described method for controlling an electrical machine of a vehicle. The computer-readable medium may be a non-transitory computer-readable medium, such as a tangible electronic, magnetic, optical, infrared, electromagnetic, and/or semiconductor system, apparatus, and/or device.

The present disclosure further relates to a control arrangement configured to control an electrical machine of a vehicle. The control arrangement may be configured to perform any one of the steps of the method for controlling an electrical machine of a vehicle as described above.

More specifically, in accordance with the present disclosure, a control arrangement configured to control an electrical machine of a vehicle is provided. Said electrical machine is configured to provide propulsion power to one or more drive wheels of the vehicle, and the vehicle comprises an energy storage system configured to power the electrical machine. The control arrangement is configured to, in response to a request for draining for draining of the energy storage system, disconnect the electrical machine from the one or more drive wheels, unless already disconnected. The control arrangement is further configured to, when the electrical machine is disconnected from the one or more drive wheels, control the electrical machine to oscillate between a first rotational speed and a second rotational speed to thereby consume energy from the energy storage system.

The control arrangement may comprise one or more control units. In case of the control arrangement comprising a plurality of control units, each control unit may be configured to control a certain function/step or a certain function/step may be divided between more than one control units. The control arrangement may be a control arrangement of a powertrain of the vehicle or at least of the electrical machine of the powertrain. Alternatively, the control arrangement may be any other control arrangement of the vehicle but configured to communicate with the electrical machine for the purpose of performing the herein described method.

The control arrangement may further be configured to predict whether the energy storage system will have sufficient capacity to enable a desired regenerative braking power for an upcoming braking event of the vehicle. If so, the control arrangement may also be configured to generate the request for draining of the energy storage system when it is predicted that the energy storage system has, or will have, an insufficient capacity to enable a desired regenerative braking power for the upcoming braking event of the vehicle.

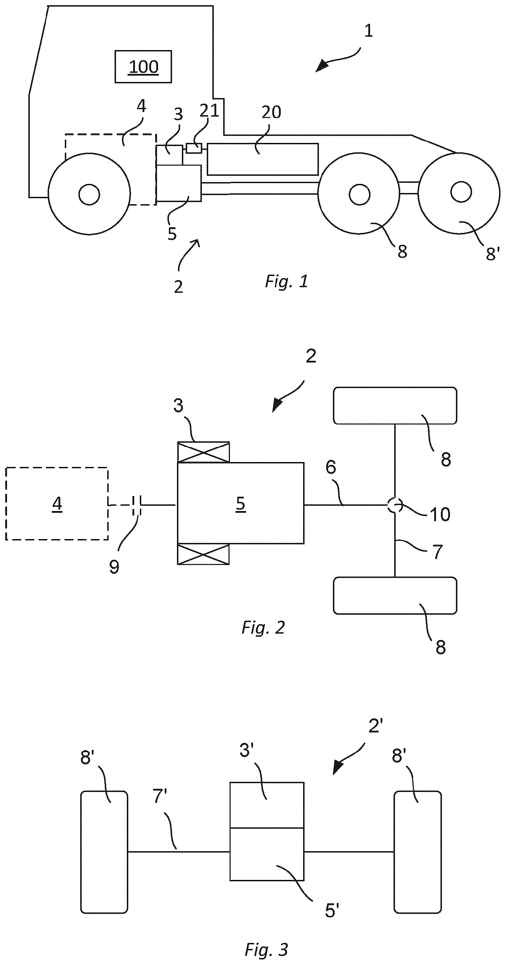

Figure 1 schematically illustrates an example of a vehicle 1, shown in a side view. The vehicle 1 may be a heavy vehicle, such as a bus or a truck, but is not limited thereto. In the figure, the vehicle 1 is illustrated as a single vehicle unit in the form of a tractor vehicle unit.

The vehicle 1 comprises an electrical machine 3, serving as a first propulsion unit of the vehicle. The electrical machine 3 is powered by an energy storage system 20 of the vehicle 1. The energy storage system 20 may be operatively connected to the electrical machine 3 via a power electronic device 21, such as an inverter or a converter. The vehicle 1 may further comprise a second propulsion unit, such as a combustion engine 4.

The electrical machine 3 and the optional combustion engine 4 are comprised in a powertrain 2 of the vehicle 1. The powertrain 2 further comprises a transmission arrangement 5 configured to selectively transfer propulsion power from the propulsion unit(s) to a first set of drive wheels 8 of the vehicle.

The vehicle 1 further comprises a control arrangement 100. The control arrangement 100 may be configured to control the electrical machine 3 for the purpose of performing the herein described method for controlling an electrical machine. The control arrangement 100 may also be configured to control other constituent components of the powertrain 2 and/or energy storage system 20.

Figure 2 schematically illustrates a first example of a powertrain 2, such as a powertrain of the vehicle 1 shown in Figure 1. The powertrain 2 comprises an electrical machine 3 and optionally a combustion engine 4. The powertrain 2 may naturally comprise more than one electrical machine 3, if desired.

The powertrain 2 further comprises a transmission arrangement 5 configured to selectively transfer power from the electrical machine 3, and the optional combustion engine 4, at different gear ratios to the drive wheels 8 of the powertrain 2. For said purpose, a propeller shaft 6 may connect the transmission arrangement 5 to a drive shaft 7 of the powertrain 2, usually via a differential 10. The drive shaft 7 is in turn connected to the drive wheels 8.

The powertrain 2 may further comprise a clutch 9 configured to allow the optional combustion engine to be connected and disconnected from the transmission arrangement 5. The powertrain 2 may also comprise means for connecting and disconnecting the electrical machine 3 from the rest of the powertrain 2, such means typically comprised in the transmission arrangement 5 and therefore not separately shown in the figure. The electrical machine 3 and the optional combustion engine 4 may naturally also be disconnected from the drive wheels 8 by putting the transmission arrangement in neutral.

Figure 3 schematically illustrates a second example of a powertrain 2'. Like the powertrain shown in Figure 2, the powertrain 2' according to the second example comprises an electrical machine 3', a transmission arrangement 5', a drive shaft 7' and a set of drive wheels 8'. However, the electrical machine 3' and the transmission arrangement 5' are arranged at the drive shaft 7'. Thereby, no propeller shaft is needed to connect the transmission arrangement 5' to the drive shaft 7'. The powertrain 2' is a so called electric drive axle, sometimes also called E-axle.

The second example of a powertrain 2', shown in Figure 3, may be comprised in the vehicle 1 shown in Figure 1 as an alternative, or in addition to, the powertrain 2 shown in Figure 2. As shown in Figure 1, the vehicle may comprise a first set of drive wheels 8 comprised in a first powertrain 2 and a second set of drive wheels 8' comprised in the second powertrain 2'. In other words, the electrical machine 3 would be configured to provide propulsion/braking power to the first set of drive wheels 8, whereas the electrical machine 4' would be configured to provide propulsion/braking power to the second set of drive wheels 8'. The powertrains 2, 2' are thus separate from each other. However, both electrical machines 3, 3' may be powered by the same energy storage system 20.

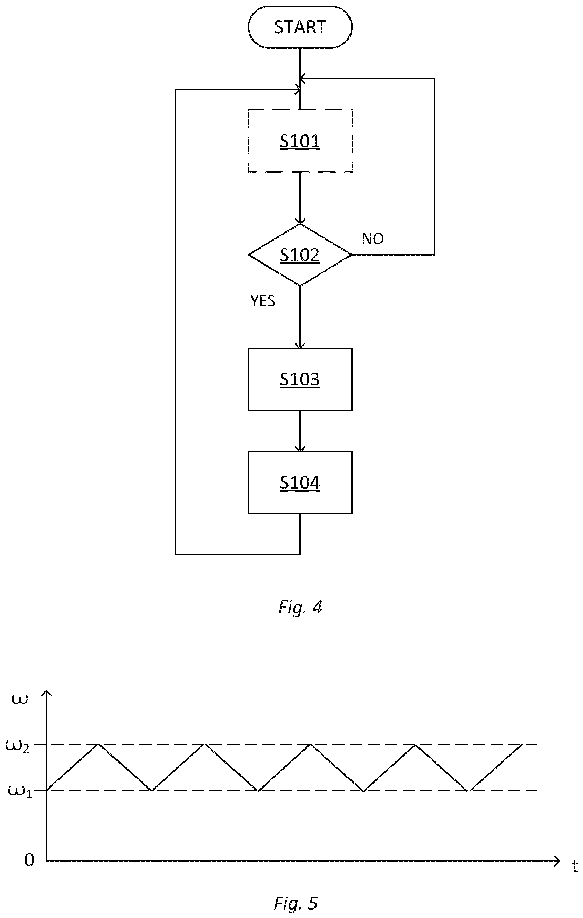

Figure 4 represents a flowchart schematically illustrating one exemplifying embodiment of the herein described method for controlling an electrical machine of a vehicle. As previously mentioned, the electrical machine is configured to provide propulsion power to one or more drive wheels of the vehicle. Moreover, the electrical machine is configured to be powered by an energy storage system of the vehicle. The electrical machine may further be configured to provide braking power to the one or more drive wheels of the vehicle through regenerative braking. Thereby, kinetic energy of the vehicle may be converted into electrical energy used for charging of the energy storage system.

The method may comprise a step S101 predicting whether the energy storage system currently has sufficient capacity, or at least will have sufficient capacity when the vehicle reaches an upcoming braking event, to enable a desired regenerative braking power for the upcoming braking event of the vehicle. Said step further comprises generating a request for draining of the energy storage system in case it is predicted that the energy storage system has, or will have, insufficient capacity to enable the desired regenerative braking power for the upcoming braking event of the vehicle.

The method comprises a step S102 of determining whether a request for draining of the energy storage system has been generated. If no such request has been generated, the method is reverted to start. However, in case it is determined in step S102 that a request for draining of the energy storage system has been generated, the method proceeds to the subsequent step S103.

Step S103 comprises disconnecting the electrical machine from the one or more drive wheels, unless already disconnected. Said step may further comprise disconnecting the electrical machine from a power-take off load, if applicable.

After step S103, i.e. when the electrical machine is disconnected from the one of more drive wheels of the vehicle and a possible power take-off load, the method comprises a step S104 of controlling the electrical machine to oscillate between a first rotational speed and a second rotational speed. Thereby, energy is consumed from the energy storage system leading to draining thereof.

The method may thereafter be returned to start as shown in the figure, or alternatively ended.

Figure 5 schematically illustrates the rotational speed of the electrical machine over time t when the electrical machine is controlled to oscillate between a first rotational speed ω₁ and a second rotational speed ω₂ in accordance with the herein described method. As can be seen from the figure, the electrical machine is repeatedly accelerated and decelerated. In the figure, the first rotational speed ω₁ and the second rotational speed ω₂ are illustrated as having the same rotational direction. However, the first rotational speed ω₁ and the second rotational speed ω₂ may alternatively have different rotational directions. It should here be noted that acceleration of the electrical machine occurs when the rotational speed is increased from zero to the first rotational speed or the second rotational speed, respectively, irrespectively of the rotational direction of the first rotational speed or the second rotational speed. Furthermore, deceleration of the electrical machine occurs when the rotational speed is reduced from the first rotational speed or the second rotational speed, respectively, to zero.

Depending on e.g. the configuration of an electrical machine, a maximum power-speed curve thereof may have different shapes. In general, the maximum power increases with rotational speed up to a certain rotational speed which may define a maximum peak power or the start of a plateau of constant, increasing, or decreasing power with increasing rotational speed. At rotational speeds above the peak or plateau, the maximum power again decreases with increasing rotational speed of the electrical machine.

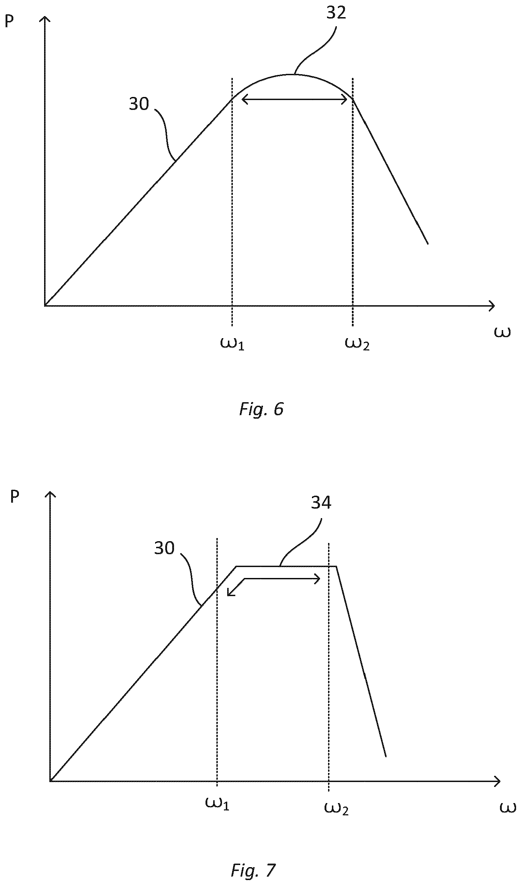

Figure 6 schematically illustrates an example of a maximum power-speed curve 30 of an electrical machine, said curve comprising a single maximum peak 32. In such a case, the first rotational speed ω₁ and the second rotational speed ω₂, between which the electrical machine is controlled to oscillate (as shown by the arrow), may suitably be on opposite sides of the peak 32 to obtain the highest power output of the electrical machine and thereby also the highest energy losses. This in turn leads to the highest consumption of energy from the energy storage system.

Figure 7 schematically illustrates a second example of a maximum power-speed curve 30 of an electrical machine, wherein the maximum power-speed curve comprises a plateau 34. The plateau 34 is here illustrated as a constant power plateau. It should however be noted that the plateau 34 may alternatively have an increasing or decreasing power with increasing speed of the electrical machine. If the inclination of the power-speed curve 30 is steep on one side the plateau 34, as shown in the figure at rotational speeds above the plateau 34, it may be beneficial to have the one of the rotational speeds within the plateau 34 e.g., to reduce the risk for overrevving the electrical machine. In the figure, the second rotational speed ω₂ is shown to be within the plateau 34. In case the power-speed curve 30 is steep on both sides of the plateau 34, both the first and second rotational speeds ω₁, ω₂ may be within the plateau. Naturally, it is however also possible the first and second rotational speeds ω₁, ω₂ are both outside of the plateau; in such a case preferably on opposite sides of the plateau.

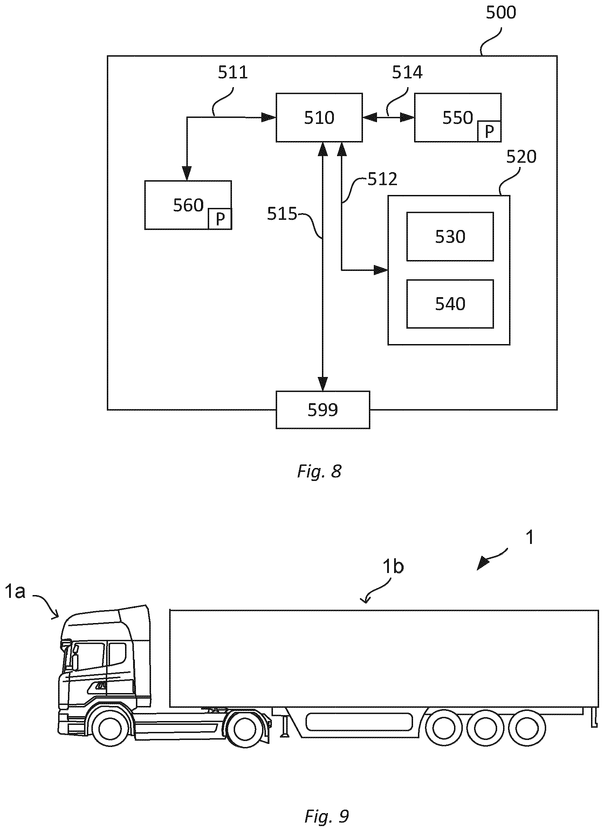

Figure 8 schematically illustrates an exemplifying embodiment of a device 500. The control arrangement 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for controlling an electrical machine of a vehicle, said electrical machine being configured to provide propulsion power to one or more drive wheels of the vehicle. In addition to the electrical machine, the vehicle comprises an energy storage system configured to power the electrical machine. The computer program comprises instructions for, in in response to a request for draining of the energy storage system, disconnecting the electrical machine from the one or more drive wheels (unless already disconnected). The computer program further comprises instructions for, when the electrical machine is disconnected from the one or more drive wheels, controlling the electrical machine to oscillate between a first rotational speed and a second rotational speed to thereby consume energy from the energy storage system.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection such as an optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Figure 9 illustrates a side view of a vehicle 1 comprising two vehicle units 1a, 1b. The first vehicle unit 1a may correspond to the vehicle 1 shown in Figure 1, and the second vehicle unit 1b may constitute a semi-trailer as shown in the figure.

Each of the vehicle units 1a, 1b may comprise at least one powertrain. For example, the first vehicle unit 1a may comprise any one of the powertrains shown in Figures 2 or 3. The second vehicle unit 1b may comprise the powertrain as shown in Figure 2, when said powertrain does not comprise a combustion engine, or the powertrain as shown in Figure 3. Each of the vehicle units 1a, 1b may comprise its own energy storage system. These energy storage systems may in turn each be configured to power an electrical machine of the vehicle unit in which it is comprised.

## Claims

1. A method, performed by a control arrangement (100), for controlling an electrical machine (3, 3') of a vehicle (1),
said electrical machine (3, 3') being configured to provide propulsion power to one or more drive wheels (8, 8') of the vehicle (1),
the vehicle (1) comprising an energy storage system (20) configured to power the electrical machine (3, 3'),
the method comprising the following steps:
in response to a request for draining of the energy storage system (20), disconnecting (S103) the electrical machine (3, 3') from the one or more drive wheels (8, 8'), unless already disconnected, and
controlling (S104) the electrical machine (3, 3') to oscillate between a first rotational speed (ω₁) and a second rotational speed (ω₂) to thereby consume energy from the energy storage system (20).

2. The method according to claim 1, wherein the step of controlling the electrical machine (3, 3') to oscillate between a first rotational speed (ω₁) and a second rotational speed (ω₂) comprises controlling the electrical machine (3, 3') to oscillate between a first rotational speed (ω₁) and a second rotational speed (ω₂) of a power-speed curve (30) of the electrical machine (3, 3'); preferably wherein the power-speed curve (30) is a maximum power-speed curve of the electrical machine (3, 3').

3. The method according to claim 2, wherein the first and second rotational speeds (ω₁, ω₂) of the power-speed curve (30) are arranged on opposite sides of a rotational speed corresponding to a peak (32) of the power-speed curve (30) of the electrical machine (3, 3').

4. The method according to claim 2, wherein at least one of said first and second rotational speeds (ω₁, ω₂) is within a plateau (34) of the power-speed curve (30) of the electrical machine (3, 3').

5. The method according to claim 1, wherein the step of controlling the electrical machine (3, 3') to oscillate between a first rotational speed (ω₁) and a second rotational speed (ω₂) comprises altering direction of rotation of the electrical machine (3, 3').

6. The method according to any one of the preceding claims, wherein the method is performed while the vehicle (1) is in motion.

7. The method according to claim 6, wherein the method is performed during coasting.

8. The method according to claim 6, wherein
the vehicle (1) comprises:
a first powertrain (2, 2') comprising the electrical machine (3, 3'), and
a second powertrain (2, 2') being separate from the first powertrain (2, 2'),
and wherein the method is performed while the vehicle (1) is propelled by the second powertrain (2, 2').

9. The method according to any one of the preceding claims, further comprising a step of:
generating (S101) the request for draining of the energy storage system (20) when it is predicted that the energy storage system (20) has, or will have, an insufficient capacity to enable a desired regenerative braking power for an upcoming braking event of the vehicle (1).

10. The method according to any one of the preceding claims, further comprising a step of:
recovering heat generated by the electrical machine (3, 3') as a result of the electrical machine (3, 3') oscillating between the first and second rotational speeds (ω₁, ω₂), and using the recovered heat for conditioning of the energy storage system (20).

11. A computer program comprising instructions which, when executed by a computer, cause the computer to carry out the method according to any one of the preceding claims.

12. A computer-readable medium comprising instructions which, when executed by a computer, cause the computer to carry out the method according to any one of claims 1 to 10.

13. A control arrangement (100) configured to control an electrical machine (3, 3') of a vehicle (1),
said electrical machine (3, 3') being configured to provide propulsion power to one or more drive wheels (8, 8') of the vehicle (1), and
the vehicle (1) comprising an energy storage system (20) configured to power the electrical machine (3, 3'),
wherein the control arrangement (100) is configured to:
in response to a request for draining of the energy storage system (20), disconnect the electrical machine (3, 3') from the one or more drive wheels (8, 8'), unless already disconnected, and
thereafter control the electrical machine (3, 3') to oscillate between a first rotational speed (ω₁) and a second rotational speed (ω₂) to thereby consume energy from the energy storage system (20).

14. The control arrangement (100) according to claim 13, wherein the first and second rotational speeds (ω₁, ω₂) correspond to a first rotational speed (ω₁) and a second rotational speed (ω₂) of a power-speed curve (30) of the electrical machine (3, 3'); preferably wherein the power-speed curve (30) is a maximum power-speed curve of the electrical machine (3, 3').

15. The control arrangement (100) according to any one of claims 13 or 14, wherein the control arrangement (100) further is configured to generate the request for draining of the energy storage system (20) when it is predicted that the energy storage system (20) has, or will have, an insufficient capacity to enable a desired regenerative braking power for an upcoming braking event of the vehicle (1).

16. A vehicle (1) comprising the control arrangement (100) according to any one of claims 13 to 15.
